# EUROPEAN PATENT SPECIFICATION

(11) **EP 0 308 056 B1**
(45) Date of publication and mention of the grant of the patent: **20.11.1996**
(21) Application number: 88307202.7
(22) Date of filing: 04.08.1988
(51) Int. Cl.: G06F 15/16, G06F 11/00, G06F 11/20

(54) **Peripheral device initiated partial system reconfiguration**
Von Peripheriegeräten ausgelöste Systemsteilrekonfiguration
Reconfiguration partielle de système lancée à partir de dispositifs périphériques

(30) Priority: 28.08.1987 US 90723
(43) Date of publication of application: 22.03.1989
(73) Proprietor: International Business Machines Corporation, Armonk, N.Y. 10504 (US)
(72) Inventor: Beardsley, Brent Cameron, Tucson, Arizona 85730 (US); Hefferon, Eugene Paul, Poughkeepsie New York 12603 (US); Lynch, Kenneth Robert, New York 12572 (US); Shipman, Lloyd R., Jr., San Jose California 95120 (US)
(74) Representative: Burt, Roger James, Dr.

(56) References cited:
- US-A- 3 818 199
- US-A- 3 953 717
- US-A- 4 207 609
- IBM JOURNAL OF RESEARCH AND DEVELOPMENT, vol. 27, no. 3, May 1983, pages 219- 236, Armonk, New York, US; W.T. COMFORT: "A fault-tolerant system architecture for navy applications"

## Description

The present invention relates to a data processing system using controllers to control the transfer of data from central processing units to peripheral devices adapted for automatic reconfiguration during operation in such a way that devices can be removed from the system during maintenance with the system automatically reconfiguring itself to continue operation.

As data processing needs of system users grow, the number of peripheral devices supported by a data processing system also grows. Multiple data processing applications require a plurality of various peripheral devices. The term "device", as used herein, includes such components, whether or not directly addressable, as control units, peripheral cache memories, communications apparatus, data storage units such as direct access storage devices (DASD), tape recorders, and the like. It also includes separately maintainable portions thereof as will become apparent. These devices occasionally need maintenance of a type requiring the device to be temporarily disconnected from the data processing system.

The maintenance of peripheral devices has become more difficult as data processing systems become more complex. Often peripheral devices are in rooms or on floors of a building separated from the connected central processing units and device controllers. The maintenance of a particular peripheral device or of a section of devices under the control of one control unit requires the coordination of the operator at the system console together with the maintenance personnel at the control units and/or devices. When a maintenance action is required on a device, the central processing units (CPUs) must first be informed that the maintenance is to take place. Information about the extent of maintenance must be provided to the central processing unit such that the processors can take the necessary action to quiesce, i.e., cease communication with the use of subchannels and channel paths that relate to the portion of the device that is to be maintained "off line". This action is necessary to maintain data integrity.

Several steps must be taken to notify all of the central processing units or host systems of the maintenance action and to determine when the action can be performed. First, a service representative or other maintenance person determines the correlation between the physical portions of the device to be maintained and the device numbers and channel path identifiers that are affected for each attached CPUs. Next, the service representative goes from CPU to CPU and enters appropriate reconfiguration commands at each CPU to quiesce the specified channel paths and I/O devices. Once a particular device has been electrically disconnected or logically isolated from the system of CPUs, the service representative then performs the required maintenance. Finally, upon completing the maintenance, the service representative goes from CPU to CPU and enters appropriate reconfiguration commands at each central processing unit to give notification that the just-maintained device is again available.

US-A- 4,195,344 discloses the use of a monitor centre that permits the automatic supervision of the configuration of a data processing system. This patent is representative of the relevant art in that if it is necessary to disconnect or reconnect the devices during the operation of a data processing system for the purpose of maintenance, inspection, or repair, it was necessary to inform the operating system of the connection or disconnection by the use of the identification number of the device. The operator communicates with the data processing system to report the disconnection and to order reconfiguration of the devices for enabling the data processing system to continue operation without the devices. Although this patent disclosed a means for automatically recognising that an error was made in the connection or reconnection condition of the device back into the system configuration, no mention is made of the system automatically reconfiguring for device maintenance nor is there disclosure of automatic reconfiguration of the system after maintenance is completed.

US-A- 4,660,141, US-A-4,604,690, US-A-4,589,063, US-A-4,403,303, and US-A-4,070,704 describe processes for the reconfiguration of data processing systems. Each of these processes requires a reload and reinitialisation of the operating system being used in the data processing system. For example, US-A- 4,604,690 discloses a process for the reconfiguration of a data processing system when a device is added to the system. The operating system is reloaded and reinitialised to reconfigure the data processing system to begin communication with the newly added device. Although useful to the addition of a new device to an already present data processing system, such teaching is not helpful when a device must be removed from the system for maintenance.

US-A- 4,207,609 discloses a method for path independent reservation and reconnection of devices to central processing units operating in a multi-CPU and shared device access system environment. Each peripheral control unit has information identifying connected CPUs and their channel attachment. When the control unit is ready to communicate with a given CPU about a given device, it may do so through anyone of several channels which it knows are connected between the given device and given CPU. This patent does not suggest how to temporarily and automatically remove a device from the system when maintenance is required on that device.

In view of the foregoing, it is the principal object of this invention to improve system reconfiguration apparatus and methods.

IBM JOURNAL OF RESEARCH AND DEVELOPMENT, International Business Machines Corporation, Armonk, New York, US, W T Comfort, "A Fault-Tolerant System Architecture for Navy Applications", Vol 27, No 3, May 1993, pages 219-236 describes a data processing system allowing for recovery from a fault condition and for on-line fault repair during which a device (functional module) exhibiting the fault is capable of external servicing or replacement. Upon detection of the failure, fault handling software (FTRM) in the system identifies the faulty device and transmits a command to all the central processing units, the input/output controller and the computer interconnection systems of the data processing system to reconfigure the data processing system so as to recover from the fault and so that the faulty device is disconnected from the system. When the fault recovery phase is completed by the completion of the reconfiguration, a display device will indicate which device has failed. The operator can then repair or replace the faulty device and on completion of this operation will press a button to transmit a signal to the data processing system. On receipt of this signal the system will test the repaired or replaced device and, if the test is satisfactory, the data processing system will be further reconfigured so as to connect the repaired or replaced device back into the system under the control of the FTRM.

Accordingly, the present invention provides a data processing system as defined in claim 1.

An embodiment of this invention disclosed hereinafter improves the maintenance of a data processing system with a minimal amount of interruption to system operation using system reconfiguration with device independent self-descriptive configuration information, removing peripheral devices of a data processing system during a repair action requiring disconnection of a device from the data processing system and returning them when appropriate.

This is accomplished by devices having a capability of sending signals to attached systems to request that those systems take the necessary steps to automatically quiesce a particular portion of the device. The signals are initiated by a command entered by maintenance personnel at the device console of the device to be maintained. The device configuration information necessary for the system to automatically quiesce use of a particular portion of the device and thereby automatically reconfigure is provided by the device to the host system. At system initialisation, a command is executed on every channel path to obtain sub-system configuration data to create a configuration record in a host system.

An example of an implementation follows. A maintenance service representative desiring to service a device, or portion thereof, enters a maintenance command at a device console or input portion. The command causes a signal requesting attention to be sent by the device to each connected CPU. After each CPU has responded to the attention signal, the device sends to the CPUs information identifying particular portion(s) of the device to be quiesced. The system responds to its system configuration information to automatically perform the necessary temporary reconfiguration. After the reconfiguration has been attempted, a command is executed which describes to the device the result of the reconfiguration attempt. Once the quiesce is effected, the service representative makes the necessary repairs knowing that the system will not attempt to access the particular portion of the device being serviced. After maintenance is completed, another command is entered at the device console, this time activating the device to signal the system to resume use of the previously quiesced portion of the device. The resume function is performed in a fashion similar to that used to originally quiesce the portion of the device being serviced.

The present invention will be described further by way of example with reference to an embodiment thereof as illustrated in the accompanying drawings, in which:-
Figure 1 is a schematic illustration of a system configuration which advantageously uses the present invention;
Figure 2 is diagrammatic illustration of data structures used to illustrate the present invention; and
Figures 3 and 4 are machine operations charts showing one implementation of the present invention.

Referring now more particularly to the drawings, like numerals indicate like features of the invention shown in the various figures. The present invention is described in a multi-host system environment. A plurality of host systems 10 are attached to a plurality of peripheral data storage subsystems 13. Additionally, host systems 10 are attached to a plurality of other peripheral subsystems 13A as is known. Each of the host systems 10 includes a plurality of channels CH 11, which respectively connect to the peripheral subsystems 13, 13A. Each of the host systems 10 may include one or more channel path connections 11 to each of the subsystems 13, 13A. Not all peripheral subsystems are attached to all of the host systems 10, while some of the subsystems are attached to a plurality of the host systems 10. For facilitating data communications between the respective host systems 10 and the various subsystems, particularly data storage subsystems, so-called channel path grouping is employed. Such channel path grouping is described in US-A- 4,207,609 and US-A-4,396,984. In any channel path group, which may include several channel paths CH 11, the host system can request a peripheral action such as data storage from a given sub-system 13. Subsystem 13 may respond to the request over another channel path within the path group. Such dynamic pathing is controlled in part by the storage subsystems as explained in US-A-4 207 609. The dynamic pathing may extend across a plurality of storage subsystems 13 as explained in US-A-4 207 609 and as contemplated in the present description.

Each of the storage subsystems 13 includes a control unit, also referred to as a storage control 14. Each of the control units 14 includes a plurality of channel attachments 15 which are electrically and logically connected to the channel paths 11 of the respective host systems 10. The purpose of the control units 14 is to intercouple the host systems 10 on a selected basis to anyone of a plurality of data storage devices as shown in the drawing. A plurality of direct access storage devices (DASD) 16-19, are connected to the control units 14 for data communications with the various host systems 10. Each of the DASD 16-19 have two accessing mechanisms or head arms for accessing a plurality of data storing disk surfaces (not shown). Additionally, each peripheral DASD includes two independently addressable disk files (disk recorders and players) with each of the disk files having two of the accessing mechanisms. This arrangement is found in the IBM 3380 data storage units and is represented by the alphabetic characters A and B in the symbol 16-19.

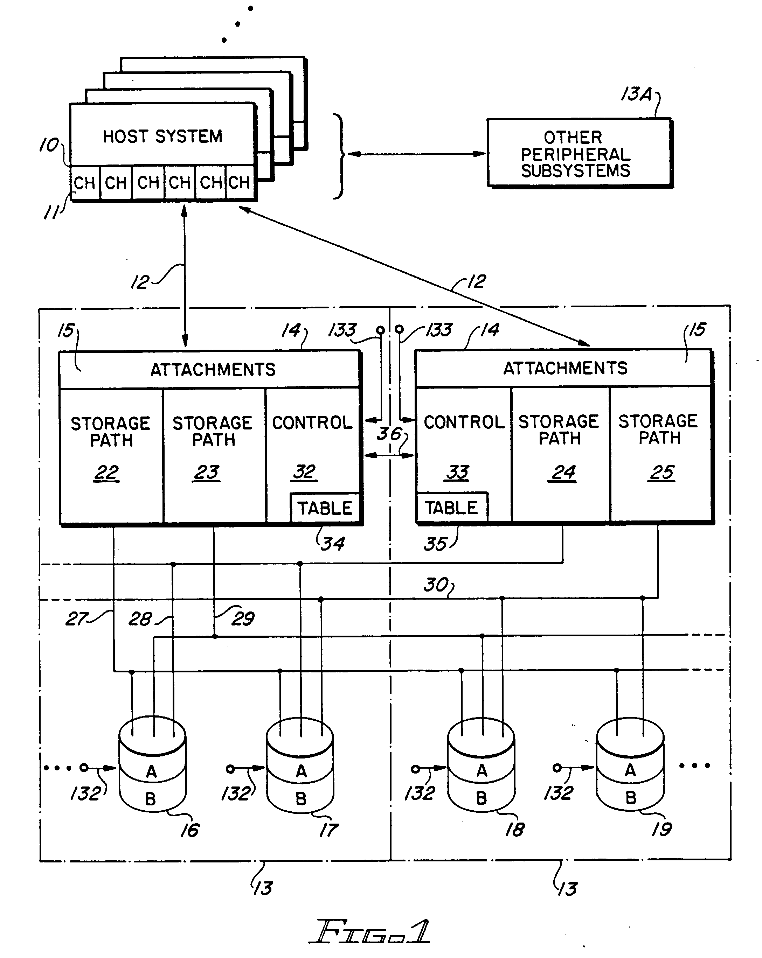

Each of the control units 14 can be constructed in a manner similar to that used for constructing the IBM 3880 type of control units. It is preferred that the models 23 and 21 represent the hardware construction of the control units which are improved by practicing the present invention. Each of the control units includes two storage directors herein referred to as storage paths and an auxiliary control which serves as a support facility for the storage paths in their respective control units 14. For example, storage paths 22 and 23 are in a left-hand control unit of Figure 1 while storage paths 24 and 25 are in the right-hand control unit. Each storage path includes a microprocessor and associated electronic circuits for transferring data signals between the DASDs 16-19 and the various host systems 10. Controls 32 and 33 in the respective control units 14 provide for general control of the control units 14 including maintenance procedures in the form of diagnostic circuits. A pair of tables 34, 35 in the respective control units 14 contain a joint array structure and path group information corresponding to the dynamic pathing memory 25′ of US-A- 4,207,609. Double-headed arrow 36 represents the electrical and logical interconnections between control units 14 for achieving the communications represented in US-A-4,207,609 and as contemplated in the present description. All of the internal portions of the control units 14 including attachments 15, storage paths 22-25, controls 32, 33 and tables 34, 35 are all electrically and logically interconnected as is known and as is practiced in the IBM 3880 storage controls.

The electrical and logical connections between the control units 14 and the DASD 16-19 uses a so-called string connection when characterised by a string controller which is attached to the respective DASDs in the string. As an example, numerals 27-30 represent respective string connections between the control units 14 and the DASDs 16-19. Each of these connections includes a controller (not shown, such as the controller used with the IBM 3380 storage unit) for providing control and data transfers for the DASDs 16-19 by the control units 14. The illustrated interconnections of the control units 14 and the DASDs 16-19 shown in Figure 1 is arbitrary; the significant thing is that several of the DASDs are connected to the two subsystems, i.e., there are cross-connections. The storage paths 22-23 are arranged in power clusters. Each cluster is independently powered. The clustering is arbitrary and based upon system needs. For example, storage paths 22 and 24 may be in one cluster while storage paths 23 and 25 can be in a second storage path cluster. Also, paths 22 and 23 may be in a single cluster while paths 24 and 25 can be in a single cluster. The present invention, as will become apparent, accommodates such power clustering in quiescing and resuming device operations in the subsystems 13. The control units 14 provide for dynamic path selection between DASD 16-19 and the various channel path groups. For example, a first dynamic path extending from one of the channels of host system 10 through a channel attachment 15 to storage path 23 thence to DASD 16. An alternate path for host system 10 is through a separate channel path 11 to an attachment 15 thence storage path 24 in a different power cluster and different control unit 14, thence over string 29 to DASD 16. The selection of such dynamic paths is under control of the subsystems 13. Of course the storage paths 23 and 24 can access any of the DASDs to which they are connected by the various string connections. Further, tables 34, 35 can be in separate power clusters along with the storage paths. Therefore a failure of one power cluster allows the subsystems 13 to operate from but one of the tables.

In accordance with the invention, a command request initiated in a peripheral sub-system 13 is transmitted to the cognisant host systems 10 for quiescing portions of the subsystems for facilitating maintenance or other related procedures. Quiescing is making a resource such as a device as defined above to become not available to any of the host systems 10. In host processor vernacular quiescing is equivalent to varying a device off-line. Upon completion of the maintenance procedure, a resume command/request is sent from the sub-system 13 to the cognisant host systems 10 indicating that normal operations with the quiesced device may be resumed.

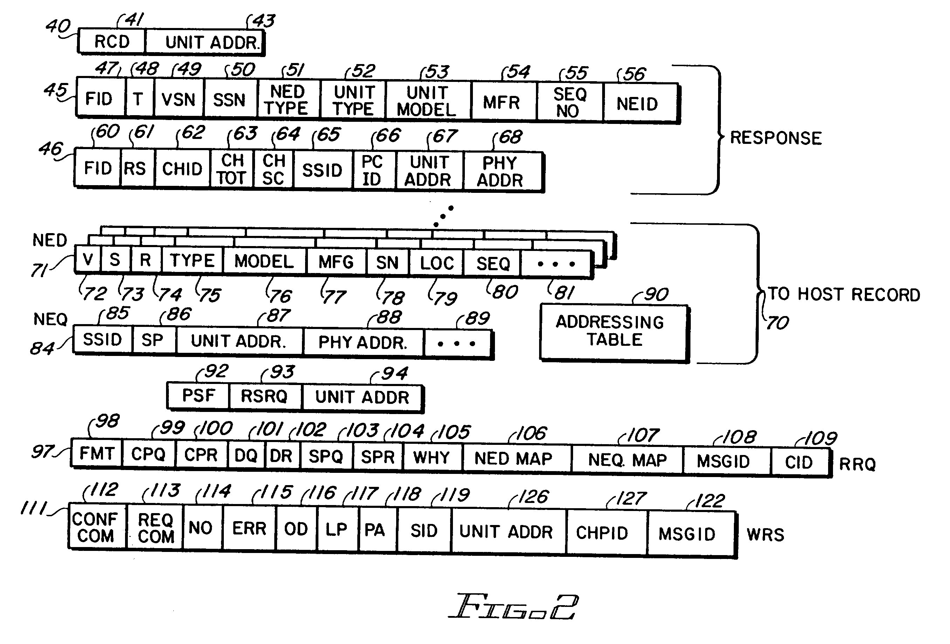

The channel command and data structures in host systems 10 and subsystems 13 as detailed in Figure 2 are next described. The channel commands are those commands supplied by a host system 10 through a channel path CH 11 to a sub-system 13 for performing a desired or requested operation. Generally such operations include data transfer commands, diagnostic commands, etc. U.S. Patent 4,574,346 shows a plurality of channel commands which are incorporated into a single channel command called reconfiguration data (RCD) as used in the present description. In implementing the present invention, such RCD channel command is expanded to include the later described function.

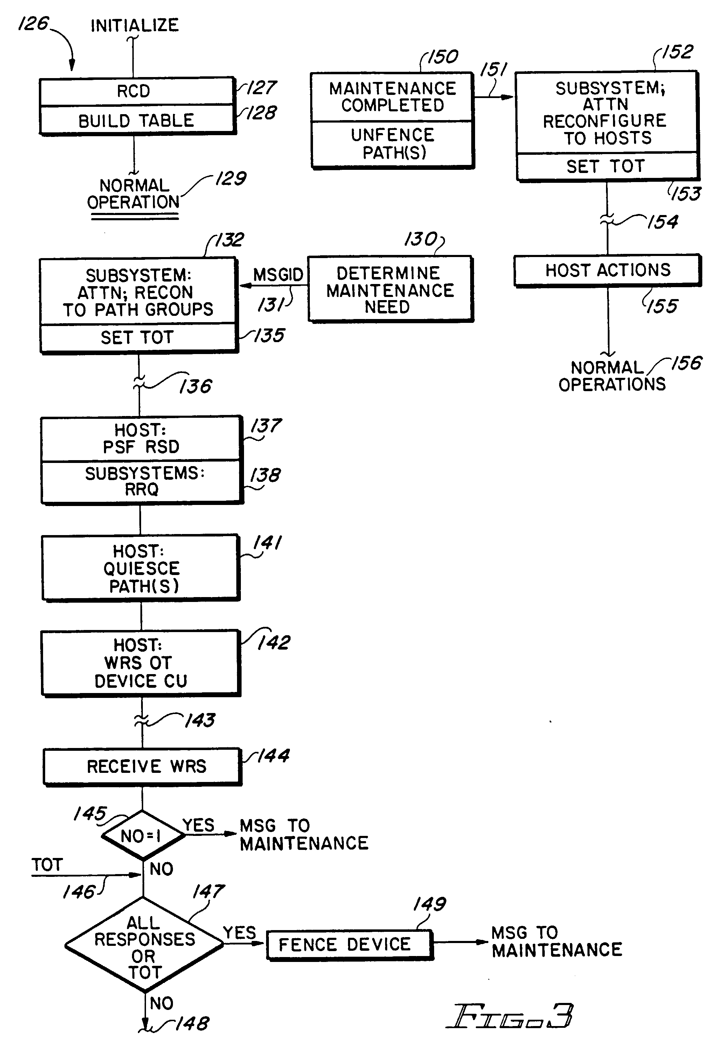

It is also to be understood that the tables of the various host systems 10 used for addressing, as is well known, are not shown in Figure 2 for purposes of simplicity. Such addressing tables include addresses and access controls associated with channel path grouping as described above. In practicing the present invention in its best mode, each of the host systems 10 includes a sub-system internal configuration record which is obtained from the respective subsystems 13, 13A upon system initialisation as described with respect to Figure 3. A form of the RCD channel command is used for establishing this host system record. A command structure 40 includes a RCD field 41 which identifies the channel command as a RCD command. Each sub-system 13 responds to the RCD 40 command to supply internal configuration data indicated by numerals 45, 46 as node element descriptors and node element qualifier, respectively. The resultant host system 10 record generated by the sub-system 13 response 45, 46 is host record 70. Firstly, the response portion 45 for the node element descriptor (NED) is a formal resulting in a transmission of a plurality of descriptors for respective node elements or devices of the respective subsystems 13.

NED 45 includes a plurality of fields headed by the identifier FID (format identification) 47 which identifies whether the following data is for a NED or for an NEQ. FID 47 identifies message portion 45 as a NED. When FID 47 is equal to one, one of the DASD devices 16-19 is being described in the NED 45. When FID 47 is equal to two, the entire DASD 16-19 is being described, i.e., a storage facility. When FID 47 is equal to three, a controller 22-25 is being described. Other values of FID 47 identify yet other node elements or devices which are selectively separable from the sub-system for maintenance purposes while allowing resume on field T to continue. When FID 47 is equal to four, the NED is a token NED. This NED is used to uniquely identify a sub-system. This NED will be the same for all devices that attach to the same controller and all controllers that attach to the same device. Field T, when one, indicates that the NED is a token NED. This is a one when FID 47 is equal to four. Field VSN 49 indicates that the serial number for the device is a valid serial number, i.e., machine readable. For example, in each of the DASDs 16-19, the machine serial number may be recorded on one of the data bearing record surfaces, may be in an EPROM of the DASD, may be on a pin board or other form of mechanical indicators which are electrically sensible. The storage path serial numbers may be constituted in a similar manner or may be on a diskette (not shown) readable by the respective controls 32, 33 during system initialisation and then stored in the tables 34, 35. It is apparent that various forms of machine readable serial numbers may be employed. Field SSN 50 indicates that the serial number included with the current NED 45 is a substitute serial number, i.e., is not one assigned to the device that is machine readable. SSN 50 is set to unity only when the device represented by NED 45 is not machine readable. Field NED-type 51 indicates the character and type of device represented by NED 45. When field 51 is equal to zero, the type is unspecified. In the present embodiment an unspecified-type device is a storage facility such as DASDs 16-19 taken as a group. When field 51 is equal to unity, then portions A or B of a DASD 16-19 related configuration is being defined. When field 51 is equal to two, a storage control type of control unit 14 is having its internal configuration being described. Other NED-type 51 values may also be used for further defining configuration of the subsystems 13. Field unit type 52 defines the manufacturer's type number assigned to the unit being defined. For example, for a storage facility, a type number is an IBM 3380, for a storage control a type number is 3880, etc. Field unit model 53 identifies the model number within the type. For example, for a 3880 type storage control, unit models may extend from model 1 through model 23, etc. depending upon the capability and internal configurations of such control units. The manufacturer (MFR) of the device is identified in field MFR 54. The manufacturing sequence number (SEQ NO) is included in field 55. The information for fields 52-54 is permanently stored in the respective units as vital product data and is, therefore, machine readable. Field NEID 56 is a node element identification. This field contains a number or other symbol to uniquely identify devices that have the same assigned or machine readable serial number. For example, portions A and B of DASD 16 share a common serial number for the storage facility DASD. In a similar manner, storage paths 22 and 23 share the same serial number of storage control or control unit 14. As an example, NEID 56 for storage path 22 may be zero while for storage path 23 may be unity.

Message portion NEQ 46 includes field FID 60 which identifies the message portion as an NEQ. Both FID 47 and FID 60 may respectively identify different types of NEDs and NEQs, respectively. Field RS 61 is a record selector for use with embodiments beyond a present description. Field CHID 62 identifies the channel paths 11 in accordance with a control unit address and position within attachments 15. For example, when the pair of subsystems 13 each of the control units 14 can include up to eight separate attachment circuits within attachments 15. Therefore, the pair of subsystems can include up to sixteen channel path attachments. CHID 62 then includes the address of the control unit or sub-system and a hexadecimal character indicating which of the channel adapters of attachment 16 is connected to the respective channel 11 of a host system 10. Single byte field CH TOT 63, when set to unity, disables a channel (CH) time out timer (TOT) within the channel adapter identified by CHID 62. In a similar manner, single byte field CH FC 64, when set to unity, disables the channel status checking for the device adapter identified in CHID 62. Field SSID 65 contains the identification number of the sub-system 13. Such SSID can be assigned by the data processing environment and is not a serial number or manufacturer assigned number. Field PC ID 66 is a two byte field for identifying a path or cluster as described above. Field unit ADDR 67 contains the unit address of a device being qualified by NEQ 46. The unit address is also termed a device address and is the coating or address used by a host system 10 to address the device when accessing a device through a channel 11. In contrast, field PHY ADDR 68 contains a physical (PHY) address of the device within a sub-system 13. Each of the control units 14 include a table matching the physical address to the unit address for accessing the respective devices. Therefore, it is seen that the response consisting of a plurality of NED's 45 along with an NEQ 46 gives to a host system 10 internal configurational data for enabling quiescing and resuming operations of devices within a sub-system 13.

Each of the host systems 10 apply the command 40 through all of the subsystems which incorporate the facilities of the present invention. Each of the host systems 10 generate a configurational table 70 for storage in the respective host systems. Each NED 45 results in a separate entry in the configurational table 70. The NED entries 71 of the host table 70 include a validity bit V 72 for indicating that an NED record exists at the memory address of the internal memory (not shown) of the respective host system 10. Byte field S 73 when set to unity indicates that the device being described is a standard device as used in connection with the data processing environment. When equal to zero, a non-standard device is indicated. Byte field R 74 when unity indicates a real device while a zero indicates a virtual device. In the present embodiment, all devices are real devices. Field type 75 indicates the type of unit. The information in this field is derived from NED-type 51. Field model 76 contains the unit type and unit model information from field 52 and 53. MFG field 77 contains the information of the manufacturer from field 54. SN field 78 contains the information from field 55. In the event a serial number and a separate manufacturing sequence number (two different numbers) are assigned, then field SEQ 80 contains the manufacturing sequence number while SN field 78 contains the assigned marketing or product serial number. It is assumed in this instance that the sequence number of field 55 is equivalent to a product serial number. LOC field 79 breaks out the manufacturing location information contained in field 54, i.e., field 54 indicates the manufacturer's name and the plant identification at which the unit was made. Elipsis 81 indicates other fields may be added to this host record.

NEQ record 84 includes SSID field 85 which stores the information contained in field 65. SP field 86 identifies the storage path associated with the NEDs 71 and is obtained from field 66. Fields 87 and 88 respectively contain the unit and physical addresses from field 67 and 68. Elipsis 89 indicates that additional fields in the record may be employed.

Now the host systems 10 have sufficient configurational data in order to automatically quiesce (vary off) and resume (vary on) devices within a sub-system 13. A comparable data structure mechanism is provided for implementing the quiesce and resume functions. PSF command 92 is a host system 10 command supplied to a sub-system 13 in response to a later described attention signal to request information concerning a quiesce or resume. Field 93 is a command modifier RSRQ which is a sub-system reconfiguration request which is addressed to a unit address indicated in field 94. The commanded sub-system 13 responds to the PSF command 92 to send an RRQ (read reconfiguration for quiesce) information indicated by numeral 97. FMP field 98 indicates the format of the RRQ, i.e., whether it corresponds to an NED type 0, 1 or 2 as explained above with respect to NED 71 and NED information 45. Field 98 is used to address which of the records 71 corresponds to the RRQ 97. Field CPQ 99 is a byte when set to unity indicates that the RRQ relates to a channel path quiesce. Correspondingly, CPR field 100 corresponds to a channel path resume request. DQ 101 corresponds to a device quiesce, i.e., a portion A or B of a storage facility or DASD 16-19 as being quiesced. Correspondingly, DR field 102 is a device resume request. SPQ 103 is a so-called inform storage path quiesce. This field indicates that a storage path will be quiesced, but that an alternate storage path in the same power cluster is available for accessing devices accessible through the storage path being quiesced. Similarly, field SPR 104 is an informed storage path resume. Optional field WHY 105 indicates the reason for the RRQ 97 such as inoperative device, degraded device, routine maintenance, etc. Fields 106 and 107 are respectively NED and NEQ byte maps for identifying which of the NEDs and NEQs stored in host record 70 need be accessed. MSGID 108 is a field containing a message identification assigned to the RRQ as later described. CID field 109 gives the channel attachment of attachments 15 identification as described above for CHID 62.

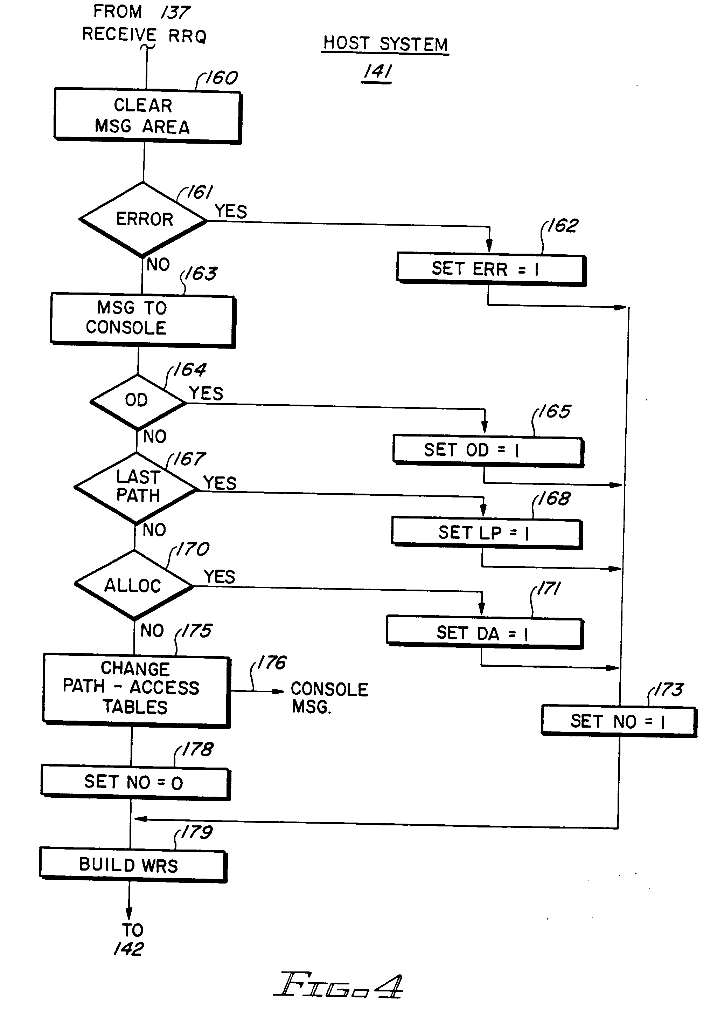

The host systems 10 receiving RRQ 97 from the machine operations is described in Figure 4. Upon completion of those operations, a response is sent by each of the host systems 10 to the requesting subsystems 13 in a message WRS 111 (write configuration status) which indicates whether or not the requested reconfiguration has been effected in the host system tables 70 as well as other addressing tables (not shown) as are used by host system 10, or if the reconfiguration failed or is not permitted as will become apparent. Field CONF COM 112 is a byte field, when set to unity, indicates that the requested configuration change has been completed. Field REQ COM 113 indicates that the request, such as a resume request, has been completed. NO field 114 indicates that the host system 10 is not honouring the requests and the quiesce resume is not supported by that host system. This means that the quiescing cannot proceed without further activity beyond the scope of the present description. Fields 115 through 118 indicate the reason for the no-byte 114 being sent. ERR field 115 indicates that a host detected an error either in the format or in the information contained in the received RRQ 97. Based upon that error, the host cannot proceed with the reconfiguration. OD field 116 indicates that the machine or data processing system operator has denied the request, then maintenance personnel will have to confer with the operator which is beyond the present description. LP field 117 indicates reconfiguration is denied because the reconfiguration would remove the last accessed path to portions of the sub-system, again activity beyond the scope of the present description is called for based upon this denial of reconfiguration. DA field 118 indicates that the reconfiguration cannot proceed because the device identified in the RRQ 97 is currently in an allocated state, i.e., being used by the host system 10 responding or another host system 10. SID field 119 contains the host system 10 identification assigned to it in the data processing environment. This is a user assigned number and not a manufacturer's assigned number. This system identification is used by personnel for identifying which host system 10 caused the reconfiguration to fail. Field 126 contains the unit address corresponding to the unit address in PSF command 92. CHPID field 127 identifies the channel path that received the attention RRQ 97. The CHPID is a channel path identification corresponding to identification CHID 62. MSGID field 122 contains the contents of MSGID field 108 such that the controller can relate the WRS 111 to the RRQ 97.

Figure 3 illustrates the machine operations in both the sub-system 13 and the host system 10 along with maintenance actions closely associated therewith for implementing the present invention in the Figure 1 illustrated data processing system employing the data structures of Figure 2. The first actions occur during data processing system initialisation. It is assumed that the various subsystems 13 have completed their respective initialisations including microprogram loading. It is also assumed that host systems 10 initialisation has been respectively completed and that the host systems 10 in the process of querying the various subsystems 13 and 13A for establishing control data tables in the respective host systems. A single host system 10 command is incorporated at 126 in the host system initialisation processing. The reconfiguration data command RCD is issued at step 127 to each of the subsystems for obtaining the NED and NEQ responses 45, 46. The respective subsystems 13 complete their response enabling each requesting host system 10 to build the host record or table 70 at step 128. Upon completion of initialisation, normal data processing operations ensue at 129.

During day-to-day operations of a data processing system, maintenance and other operating personnel observe the operations of devices in sub-system 13. If a maintenance need is determined as at step 130, then a message is sent into sub-system 13 as indicated by arrow 131. Controls 32, 33 are programmed to respond to the commands and have connections to the various portions of the sub-system 13 for acquiring status information and for performing maintenance related functions. Additionally, controls 32, 33 communicate with host system 10 through the storage paths 22-25 for sending the response 45, 46 to the RCD command 40, sending the RRQ request and receiving the WRS host response. Each RRQ 97 request has a unique MSGID which is returned in the WRS 111. This allows the controller to determine which hosts have responded to the RRQ 97. The controller can be a single or multi-path controller. The maintenance person will either:
A) want to take down a cluster for controller maintenance.
   - On single path controller, the controller must be quiesced for both SPs.
   - On multi-path controller, the controller must be quiesced.
   or
B) want to take down a path for DDC or controller maintenance.
   - On single path controller, quiesce the controller for the path needed.
   - On multi-path controller, quiesce the controller.
      - This is because other SP in cluster can pick up all the work without the host being aware that the resource was lost.
   or
C) want to repair the device, quiesce the device.

Such commands include a request to quiesce a controller, resume a controller, quiesce a storage path and resume a storage path, quiesce a device and resume a device, request status (the controls 32, 33 then display the status corresponding to the received WRS 111 to a supplied MSGID), cancel a request (RRQ is cancelled) as well as other commands not related to the present invention. When a quiesce request is cancelled, controls 32, 33 cause a corresponding storage path 22-25 to send an RRQ 97 re-establishing or resuming normal operations. Such command insertion locations are diagrammatically illustrated in Figure 1 by the arrows 132 for the DASD 16-19 and arrows 133 for controls 32, 33. Such insertion points may be a separate console or control panel as usually found on peripheral equipments, may also merely constitute a receptacle into which a cable connected to a diagnostic computer is inserted. Other forms of command inputs are readily available and can be easily envisioned.

Controls 32, 33 respond to a receive command as indicated at step 132 by activating a corresponding storage path 22-23 to send an attention signal (presentation of status information can be obtained from the IBM OEMI manual) indicating a message from the controller is waiting to be read. One attention signal is supplied over a channel path in each of the channel path groups as set forth in US-A-4 207 609 and any channel path that is not a member of a multiple channel path group. A time out timer (TOT, not shown) of controls 32, 33 is set at step 135. Typically, time out is measured in minutes. If not all of the host systems 10 respond when the timer times out, then a message is given to the maintenance personnel indicating that fact. Maintenance personnel then can cause the device to be isolated for maintenance purposes. Upon completion of steps 132 and 135, normal operations ensue as indicated by numeral 136 awaiting the responses from each of the host systems 10 channel path group. This means a given host system 10 which has for example two channel path groups, will send two responses to the requesting sub-system 10, one for each of the channel path groups. If all eight channels of a host system 10 are individually operating, i.e., not a member of a channel path group, then the host system 10 responds with eight WRS 11 responses.

The host system 10 action to each received RRQ 97 is illustrated in steps 137 through 142. At step 137, the receiving host system recognise the attention signal with the request for reconfiguration. It then supplies to the requesting sub-system 13 for each received attention signal the PSF command 92 which indicates to sub-system 10 to send a message. The sub-system responds at step 138 to send the message, which is a RRQ 97, over the indicated channel path. The message type indicates that it is a RRQ 97. Note that the PSF 92 command can come over one channel path of a channel path group while the RRQ 97 returns over another channel path to the host processor within that same channel path group. At step 141, the host responds to the RRQ to attempt to quiesce the paths or devices as further explained later in Figure 4. Upon completion of step 141, the responding host system 10 sends WRS 111 at step 142 to the sub-system 13. The travel path of WRS 111 is first to the storage path 22-25, then to controls 32, 33 which then update the JAS in tables 34, 35. All of the above described actions are represented in Figure 3 by numeral 144. Numeral 143 indicates that various actions within both the host system 10 and the sub-system 13 may occur during these times. At decision step 145, control 32 or 33 determine whether or not NO field 114 of WRS 111 is equal to unity. If it is equal to unity, the attempted reconfiguration is refused or has failed with a suitable message being supplied to a maintenance panel readable by the maintenance personnel. Such messages will include the SID 119, unit ADR 126 and CHPID 129 of WRS 111 as well as other pertinent information. If the NO field 114 is zero, then at step 147 the control 32 or 33 determine whether or not all of the responses from the several RRQ 97 sent to host systems 10 have been received or if all the responses have not yet been received reconfiguration cannot proceed. Therefore, normal operations are returned to as indicated at end point 148. If all the responses have been received, then at step 149 control 32 or 33 "fences" the device to be isolated. This is both a logical and electrical fence for enabling maintenance personnel to access the identified device for maintenance exercising or repair. Upon fencing the device, a message (MSG) is also sent to the maintenance panel along with the other pertinent information of WRS 111 for reading by the maintenance personnel so that maintenance can quickly proceed.

Upon completion of the maintenance as indicated at numeral 150, maintenance personnel supply a resume command as indicated by arrows 132, 133 for enabling the resume of operations. When the resume command goes to a DASD 16-19, the DASD supplies the resume command over one of its string connections 27-30 to control 32. Control 32 or 33 responds to the resume command to unfence the fenced device. Upon completion of the unfencing, control 32 or 33 activates a storage path 22-25 as indicated by arrow 151 to supply an attention signal with the reconfigure modifier to all of the host systems 10 that received the previous RRQ 97 at step 132. Again, there is one RRQ 97 sent to each access channel or channel path group. If some of the channels or channel path groups became inoperative in step 132, then those channels or channel path groups will not receive the RRQ 97. If on the other hand some of the channel path or channel path groups became active since step 132, then the RRQ 97 sent at step 152 will go to those channels and channel path groups as well. In step 152, the phrase "to hosts" indicate a plurality of messages as above stated. A time out timer is set at step 153. Other operations ensue as indicated by numeral 154. The host systems 10 respond as above described for the quiesce request. Such host actions are represented at step 155 and correspond to the steps 137-142 except that reconfiguration is for resuming or setting up access to the previously quiesced device. Upon completion of the reconfiguration, control 32 or 33 will send a message to the maintenance personnel as indicated at step 149 indicating that a device resume has been completed. When a time out timer expires either for a quiesce or resume, the time out timer activates control 32 or 33 for completing the sub-system 13 machine operations as if all the responses had been received. For a quiesce request, the time out timer wake up signal supplied is indicated by arrow 146 causing control 32 or 33 to execute step 147 and then step 149 even though all of the responses have not yet been received.

Figure 4 illustrates the host system action in response to each RRQ 97. The RRQ 97 is received from step 137 of Figure 3. The host system 10 clears a message area at step 160 for building WRS 111. First host system 10 checks to see if an error has occurred in RRQ 97. If at step 161 such an error occurs, then at step 162, host system 10 accesses the just cleared message area (not shown but resides in main memory of the host system) 160 for setting ERR field 115 to unity. The host system then proceeds to step 173 for setting NO field 114 to unity. Then the WRS 111 is built at step 179 and sent to the sub-system 13 at step 142. When the quiescing host system 10 finds no error in RRQ 97 at step 161, it then sends a message to the console at step 163 for the benefit of the data processing system operator. The operator in most instances determines whether or not a reconfiguration is permitted. The console operator will respond to the quiescing host system 10 using a console message which is received by the program causing the quiescing which program is in the operating system of the host system. If the console message indicates that the operator has denied the requested reconfiguration, the host system 10 proceeds from step 164 to step 165 for setting OD field 116 of WRS 111 to unity. It then proceeds to the previously described steps 173, 179. If the operator does not object to reconfiguration, then the host system 10 proceeds from step 164 to step 167 to examine its configuration tables such as tables 70 and other addressing tables used in the host system 10 such as in connection with practicing the invention for patent US-A-4 207 609. If a last pass to portions of the sub-system 13 is removed, then reconfiguration should not proceed. Accordingly, host system 10 at step 168 sets LP field 117 of WRS 111 to unity, then proceeds to steps 173, 179. If the reconfiguration does not result in removal of a last access path at step 167, host system 10 at step 170 determines whether or not the device is allocated to access to one of the DASD 16-19. Such device can be allocated whether it be a storage path 22-25, etc. If an allocation is effected (note that the dynamic pathing may avoid an adverse effect on an allocation of device 16-19 by removal of a storage path 22-25 from the accessed paths), then host system 10 proceeds to step 175 for changing its path access table. Upon completion of those changes, a console message is sent to the operator as indicated by arrow 176. If on the other hand an allocation is impacted negatively, then at step 171 host system 10 sets DA field 118 of WRS 111 to unity, then proceeds to step 173, 179. Upon its successful completion of a reconfiguration by changing the path access tables within the host system 10 which impact the unit address indicated in field 87 of the host record 70, host system 10 sets NO field 114 to zero, then proceeds to building WRS 179. Note that the unit address of WRS 111 corresponds to the unit address in field 87 of the host record 70 accessed during the reconfiguration.

From the above it can be seen that reconfiguration is automatically performed by commands entered into the peripheral sub-system 13 with all of the connected host systems 10 updating their table for effecting the logical reconfiguration without negatively impacting the data processing system data integrity. It should be noted that there is one host record 70 for each unit address 87 in each of the subsystems 13 which employ apparatus for implementing the present invention. Such records occur in each of the host systems 10 connected to the sub-system 13.

## Claims

1. A data processing system comprising:
one or more host processors (10), connected by one or more channels (11, 12) to one or more peripheral sub-systems (13), each peripheral subsystem including one or more devices (16, 17, 18, 19) capable of being externally serviced or replaced,
each peripheral sub-system comprising
a sub-system configuration table (34) indicating all subsystem internal access paths to the devices for enabling access by said one or more host processors to the devices; and
control means (32, 33) responsive to an external command from an operator, said external command being either a first request for temporarily preventing access to a first device by the one or more host processors to allow servicing or replacement thereof or a second request indicating that the disconnected first device has been reconnected after it has been serviced or replaced;
said control means comprising
generating means which in response to said first request generates a plurality of reconfiguration requests relating to each possible access path between said one or more host processors and the first device and sends the plurality of reconfiguration requests over the respective possible access paths to the respective host processors, and which in response to said second request generates a plurality of second signals relating to each possible access path between said one or more host processors and the first device and sends the plurality of second signals over the respective possible access paths to the respective host processors;
each said host processor comprising said sub-system configuration table and comprising
configuration control means, said configuration control means comprising
first reconfiguration means responsive to the received reconfiguration requests for determining permissibility of the requested disconnection, wherein if the determining indicates permitted disconnection, indicating such disconnection in the configuration tables for the respective access paths and supplying a reconfiguration indication message to the peripheral sub-system, and wherein if the determining indicates disconnection is not permissible, then sending a denial message to the peripheral sub-system that the disconnection is denied; and
second reconfiguration means which in response to said second signals indicates reconnection of first device in the configuration tables for the respective access paths;
each peripheral sub-system further comprising
means which, if all the messages received from said one or more host processors are reconfiguration indication messages, indicates to the operator that reconfiguration has been completed, thereby permitting disconnection of the first device by the operator and which, if at least one disconnection denial message has been received from at least one of the host processors, indicates to the operator that reconfiguration has been denied.

2. A data processing system as claimed in claim 1, wherein there are a plurality of channel paths (11, 12, 15) extending between one host processor (10) and one peripheral sub-system (13), of which predetermined ones of the channel paths are logically grouped, the communication means (32) including means for sending a request over each of the channel paths which are includable into an access path between the host processor and the device to be disconnected excepting that in the channel paths belonging to a group of channel paths the request is sent over any single one of the channel paths within the respective group of channel paths.

3. A data processing system as claimed in claim 2, wherein one peripheral sub-system (13) includes a plurality of programmed control units (14) and a larger plurality of peripheral units, the generating means (32) including communication means (32) in each of the control units, which are independently operable to make reconfiguration requests;
each of the control units (14) including devices within an access path of the peripheral sub-system (13) which are path devices and each of the peripheral units including at least one device which is a peripheral device with interconnections between the control units (14) and the peripheral units such that each peripheral unit can be accessed by any one of a plurality of path devices in either of the control units;
each of the control units (14) having a configuration path for each of the peripheral devices which includes identification of all internal access paths of the sub-system including identification of the path devices and further including a configuration path for each of the path devices which of the peripheral devices are accessible via the respective path device; and
the communication means (32) sensing the maps for determining which of the channel paths and channel path groups to send the request over to the host system.

4. A data processing system as claimed in either of claims 2 or 3, further including, in combination:
means in each of the control units (14) having access to the configuration maps and operative when the system is initialised to supply a copy of all of the configuration maps to the host system; and
the configuration control means in the host processor receiving the configuration maps and storing same and accessing same during the analysis for examining the configuration map to determine the effect of the reconfiguration and changing the maps whenever the reconfiguration is approved.

5. A data processing system as claimed in claim 4, further including, in combination:
an operator console connected to the host processor for providing communication between said operator and one host processor; and
the configuration control means in the host processor being coupled to the console and for each request received for reconfiguration supplying a message to the console for obtaining approval of the operator for such requested reconfiguration before approving such requested reconfiguration.

6. A data processing system as claimed in claim 4 or claim 5, wherein the configuration control means is operatively coupled to the stored configuration tables and having analysis means performing the analysis including examining the stored configuration tables to ascertain whether the requested configuration would remove the last access path to any of the devices and approving the reconfiguration only if at least one access path remains for any of the devices in the sub-system (13).

7. A data processing system as claimed in any of claims 4 to 6, wherein the configuration control means in the host system has error control means for analysing each of the received requests for reconfiguration for detecting errors in the request and if an error is detected in any one of the received requests not approving such one received request.

8. A data processing system as claimed in any of claims 4 to 7, wherein the host system includes an operator console and the host processor has a plurality of addressing tables; query means in the response means of the configuration control means for sending inquiries to the console for obtaining host operator permission, for examining a received reconfiguration request for detecting error and for determining the last path of access to a device affected by the reconfiguration request and sending a denial indication to the response means whenever any of the queries indicate no operator permission, a last path exists or an error exists; the response means sending the denial information as a part of the write system status command.

9. A data processing system as claimed in claim 8, further including identification means in the response means for adding to the write system status command information identifying the access path and the host processor which gave the denial.

10. A data processing system as claimed in claim 3, wherein each of the control units (14) includes a single command input portion acting as the command input portions for all of the path devices within such control unit; each of the common command input portions including programmed means constituting the reconfigure request means and the communication means; and a plurality of peripheral units attached to the control units (14) for communication therewith and each of the peripheral units including at least one of the peripheral devices and having a peripheral common command input portion for all of the devices within the respective peripheral unit as constituting the command input portions of the respective devices and including means for supplying reconfiguration requests received from the respective peripheral common command input portions to the communication means for relaying to the host processor via one of the path devices in one of the access paths to the device being reconfigured from the host system.

11. A data processing system as claimed in claim 10, wherein, instead of the devices having a command input portion, the command input portion can come from a single host console to allow the controller to coordinate removal of resource from all attached host processors.

## Patentansprüche

1. Datenverarbeitungssystem, umfassend:
einem oder mehreren Hosts (10), die über einen oder mehrere Kanäle (11, 12) mit einem oder mehreren peripheren Subsystemen (13) verbunden sind, wobei jedes periphere Subsystem ein oder mehrere Geräte (16, 17, 18, 19) enthält, das/die extern bedient oder ausgetauscht werden können,
wobei jedes periphere Subsystem
eine Subsystem-Konfigurationstabelle (34), die alle subsysteminternen Zugriffspfade zu den Geräten angibt, um dem einen oder den mehreren Hosts den Zugriff auf die Geräte zu ermöglichen; und
Steuermittel (32, 33) umfaßt, die auf einen externen Befehl von einem Bediener ansprechen, wobei der externe Befehl entweder eine erste Anforderung, den Zugriff auf ein erstes Gerät durch den einen oder die mehreren Hosts vorübergehend zu verhindern, um dessen Wartung oder dessen Austausch zu ermöglichen, oder eine zweite Anforderung ist, die angibt, daß das getrennte erste Gerät wieder angeschlossen wurde, nachdem es gewartet oder ausgetauscht worden ist;
wobei die Steuermittel
ein Erzeugungsmittel umfassen, das als Antwort auf die erste Anforderung eine Vielzahl von rekonfigurations-Anforderungen erzeugt, die sich auf jeden möglichen Zugriffspfad zwischen dem einen oder den mehreren Hosts und dem ersten Gerät beziehen, und die Vielzahl der Rekonfigurtions-Anforderungen über die jeweils möglichen Zugriffspfade an die entsprechenden Hosts sendet und das als Antwort auf die zweite Anforderung eine Vielzahl von zweiten Signalen erzeugt, die sich auf jeden möglichen Zugriffspfad zwischen dem einen oder den mehreren Hosts und dem ersten Gerät beziehen, und die Vielzahl der zweiten Signale über die jeweils möglichen Zugriffspfade an die entsprechenden Hosts sendet;
wobei jeder Host die Subsystem-Konfigurationstabelle und
ein Konfigurationssteuermittel umfaßt, wobei das Konfigurationssteuermittel erste Rekonfigurationsmittel umfaßt, die auf die empfangenen Rekonfigurations-Anforderungen ansprechen, um die Zulässigkeit der angeforderten Trennung festzustellen, wobei Sie, wenn Sie feststellen, daß die Trennung erlaubt ist, diese Trennung in den Konfigurationstabellen für die entsprechenden Zugriffspfade angeben und eine Rekonfigurationsanzeige-Nachricht an das periphere Subsystem übertragen, und wenn Sie feststellen, daß die Trennung nicht zulässig ist, eine Ablehnungsnachricht an das periphere Subsystem senden, die besagt, daß die Trennung abgelehnt wird; und
ein zweites Rekonfigurationsmittel umfaßt, das als Antwort auf die zweiten Signale den Wiederanschluß des ersten Geräts in den Konfigurationstabellen für die entsprechenden Zugriffspfade anzeigt;
wobei jedes periphere Subsystem desweiteren
ein Mittel umfaßt, das, wenn alle von dem einen oder den mehreren Hosts empfangenen Nachrichten Rekonfigurationsanzeige-Nachrichten sind, dem Bediener anzeigt, daß die Rekonfiguration abgeschlossen ist und dabei die Trennung des ersten Geräts durch den Bediener erlaubt und das, wenn mindestens eine Trennungsablehnungsnachricht von mindestens einem der Hosts empfangen wurde, dem Bediener anzeigt, daß die Rekonfiguration abgelehnt wurde.

2. Datenverarbeitungssystem wie in Anspruch 1 beansprucht, in dem es eine Vielzahl von Kanalpfaden (11, 12, 15) gibt, die sich zwischen einem Host (10) und einem peripheren Subsystem (13) erstrecken, von denen vorher festgelegte Kanalpfade logisch in Gruppen zusammengefaßt werden, wobei das Kommunikationsmittel (32) ein Mittel enthält, um eine Anforderung über jeden der Kanalpfade, die in einen Zugriffspfad zwischen dem Host und dem zu trennenden Gerät einbezogen werden können, zu senden, mit der Ausnahme, daß die Anforderung in den Kanalpfaden, die zu einer Gruppe von Kanalpfaden gehören, über einen beliebigen einzelnen Pfad der Kanalpfade innerhalb der entsprechenden Gruppe von Kanalpfaden gesendet wird.

3. Datenverarbeitungssystem wie in Anspruch 2 beansprucht, in dem ein peripheres Subsystem (13) eine Vielzahl von programmierten Steuereinheiten (14) und eine größere Vielzahl von peripheren Einheiten umfaßt, wobei das Erzeugungsmittel (32) Kommunikationsmittel (32) in jeder der Steuereinheiten enthält, die unabhängig voneinander betriebsbereit sind, um Rekonfigurationsanforderungen zu stellen;
wobei jede der Steuereinheiten (14) Geräte innerhalb eines Zugriffspfads des peripheren Subsystems (13) enthält, bei denen es sich um Pfadgeräte handelt, und wobei jede der peripheren Einheiten mindestens ein Gerät enthält, bei dem es sich um ein Peripheriegerät mit Zwischenverbindungen zwischen den Steuereinheiten (14) und den peripheren Einheiten handelt, so daß auf jede periphere Einheit durch ein beliebiges einer Vielzahl von Pfadgeräten in einer der Steuereinheiten zugegriffen werden kann;
wobei jede der Steuereinheiten (14) einen Konfigurationspfad für jedes der Peripheriegeräte hat, der eine Kennung aller internen Zugriffspfade des Subsystems einschließlich einer Kennung der Pfadgeräte enthält, und die desweiteren einen Konfigurationspfad für jedes der Pfadgeräte enthalten, wobei über das entsprechende Pfadgerät auf die Peripheriegeräte zugegriffen werden kann; und
wobei das Kommunikationsmittel (32) die Übersichten prüft, um festzustellen, über welche Kanalpfade und Kanalpfadgruppen die Anforderung an das Hostsystem zu senden ist.

4. Datenverarbeitungssystem wie in einem der beiden Ansprüche 2 oder 3 beansprucht, das desweiteren in Kombination enthält:
ein Mittel in jeder der Steuereinheiten (14), das Zugriff auf die Konfigurationsübersichten hat und betriebsfähig ist, wenn das System initialisiert wird, um dem Hostsystem eine Kopie aller Konfigurationsübersichten zu übergeben; und
wobei das Konfigurationssteuermittel im Host die Konfigurationsübersichten empfängt, speichert und während der Analyse auf Sie zugreift, um die Konfigurationsübersichten zur Feststellung der Auswirkung der Rekonfiguration zu prüfen und um die Übersichten immer dann zu ändern, wenn der Rekonfiguration zugestimmt wird.

5. Datenverarbeitungssystem wie in Anspruch 4 beansprucht, das desweiteren in Kombination enthält:
eine Bedienerkonsole, die mit dem Host verbunden ist, um eine Kommunikation zwischen dem Bediener und einem Host zu ermöglichen; und
wobei das Konfigurationssteuermittel in dem Host mit der Konsole verbunden ist und für jede empfangene Rekonfigurationsanforderung eine Nachricht an die Konsole sendet, um die Zustimmung des Bedieners für solch eine angeforderte Rekonfiguration zu erhalten, bevor es die angeforderte Rekonfiguration genehmigt.

6. Datenverarbeitungssystem wie in Anspruch 4 oder in Anspruch 5 beansprucht, wobei das Konfigurationssteuermittel mit den gespeicherten Konfigurationstabellen operativ verbunden ist und ein Analysemittel hat, das die Analyse einschließlich der Prüfung der gespeicherten Konfigurationstabellen durchführt, um festzustellen, ob die angeforderte Rekonfiguration den letzten Zugriffspfad zu beliebigen der Geräte entfernen würde, und das der Rekonfiguration nur zustimmt, wenn mindestens ein Zugriffspfad für beliebige der Geräte im Subsystem (13) übrig bleibt.

7. Datenverarbeitungssystem wie in einem der Ansprüche 4 bis 6 beansprucht, wobei das Konfigurationssteuermittel im Hostsystem Fehlersteuermittel zur Analyse einer jeden der empfangenen Rekonfigurations-Anforderungen hat, um Fehler in der Anforderung festzustellen, und wenn ein Fehler in einer beliebigen der empfangenen Anforderungen festgestellt wird, um dieser empfangenen Anforderung nicht zuzustimmen.

8. Datenverarbeitungssystem wie in einem der Ansprüche 4 bis 7 beansprucht, wobei das Hostsystem eine Bedienerkonsole enthält und der Host eine Vielzahl von Adressierungstabellen hat; Abfragemittel in dem Antwortmittel des Konfigurationssteuermittels zum Senden von Abfragen an die Konsole, um die Erlaubnis des Host-Bedieners zu erhalten, um eine empfangene Rekonfigurationsanforderung auf Fehler zu prüfen und um den letzten Zugriffspfad zu einem Gerät festzustellen, das von der Rekonfigurationsanforderung betroffen ist, und um immer dann eine Ablehnungsmeldung an das Antwortmittel zu senden, wenn eine der Abfragen keine Erlaubnis des Bedieners anzeigt, ein letzter Pfad besteht oder ein Fehler vorhanden ist; wobei das Antwortmittel die Ablehnungsinformationen als Teil des Schreibsystemstatusbefehls sendet.

9. Datenverarbeitungssystem wie in Anspruch 8 beansprucht, das desweiteren Kennzeichnungsmittel in dem Antwortmittel enthält, um dem Schreibsystemstatusbefehl Informationen hinzuzufügen, die den Zugriffspfad und den Host kennzeichnen, welche die Ablehnung ausgaben.

10. Datenverarbeitungssystem wie in Anspruch 3 beansprucht, wobei jede der Steuereinheiten (14) einen Eingabeteil für einen einzelnen Befehl hat, der als Befehlseingabeteil für alle Pfadgeräte innerhalb dieser Steuereinheit fungiert; wobei jeder der Eingabeteile für einen gemeinsamen Befehl programmierte Mittel enthält, die das Rekonfigurations-Anforderungsmittel und das Kommunikationsmittel bilden; und wobei eine Vielzahl von peripheren Einheiten an die Steuereinheiten (14) angeschlossen ist, um mit Ihnen zu kommunizieren und wobei jede der peripheren Einheiten mindestens eines der Peripheriegeräte enthält und einen peripheren Eingabeteil für einen gemeinsamen Befehl für alle Geräte innerhalb der entsprechenden peripheren Einheit hat, der die Befehlseingabeteile der entsprechenden Geräte darstellt, und Mittel enthält, um von den entsprechenden peripheren Eingabeteilen für einen gemeinsamen Befehl empfangene Rekonfigurations-Anforderungen an das Kommunikationsmittel zu senden, um Sie über eines der Pfadgeräte in einem der Zugriffspfade zu dem Gerät, das von dem Hostsystem rekonfiguriert wird, an den Host zu übertragen.

11. Datenverarbeitungssystem wie in Anspruch 10 beansprucht, in dem nicht die Geräte einen Befehlseingabeteil haben, sondern der Befehlseingabeteil statt dessen von einer einzigen Host-Konsole kommen kann, um der Steuereinheit die Koordination der Entfernung einer Ressource von allen angeschlossenen Hosts zu ermöglichen.

## Revendications

1. Ensemble de traitement de l'information comprenant:
un ou des processeurs principaux (10), connectés par un ou par plusieurs canaux (11, 12) à un ou plusieurs sous-systèmes (13), chaque sous-système périphérique incluant un ou des dispositifs (16, 17, 18, 19) qui peuvent être réparés ou remplacés de l'extérieur,
chaque sous-système périphérique comprenant
une table de configuration (34) du sous-système indiquant tous les chemins internes d'accès du sous-système aux dispositifs, pour permettre au ou aux dit(s) processeurs principaux d'accéder aux dispositifs; et
des moyens de contrôle (32, 33) sensibles à une commande externe émanant d'un opérateur, la dite commande externe consistant soit en une première requête pour rendre temporairement impossible, depuis le ou les processeurs principaux, l'accès à un premier dispositif afin d'en assurer la maintenance ou le remplacement, soit en une seconde requête indiquant que le premier dispositif déconnecté a été reconnecté après son entretien ou son remplacement;
les dits moyens de contrôle comprenant
un dispositif générateur qui, en réponse à la dite première requête, génère plusieurs requêtes de reconfiguration concernant chaque chemin d'accès possible entre le ou les dits processeurs principaux et le premier dispositif et envoie ces diverses requêtes de reconfiguration aux processeurs principaux respectifs, par les chemins d'accès respectifs possibles, et qui, en réponse à la dite seconde requête, produit divers seconds signaux relatifs à chaque chemin d'accès possible entre le ou les dits processeurs principaux et le premier dispositif et envoie les divers second signaux, par les chemins d'accès respectifs possibles, aux processeurs principaux respectifs;
chacun des dits processeurs principaux comprenant la dite table de configuration du sous-système et comprenant
un moyen de commande de la configuration, le dit moyen de commande de la configuration comprenant
un premier dispositif de reconfiguration qui, en réponse aux requêtes de reconfiguration reçues, examine la recevabilité de la demande de déconnexion, où, si la détermination indique que la déconnexion est autorisée, alors il indique cette déconnexion dans les tables de configuration pour les chemins d'accès respectifs et délivre au sous-système périphérique un message indicatif de la reconfiguration, et où, si la détermination indique que la déconnexion n'est pas autorisée, il envoie alors un message de rejet au sous-système périphérique, indiquant que la demande de déconnexion est rejetée; et
un second dispositif de reconfiguration qui, en réponse aux dits seconds signaux, indique la reconnexion du premier dispositif dans les tables de configuration des chemins d'accès respectifs;
chaque sous-système périphérique comprenant en outre
un moyen qui, si tous les messages reçues du ou des dits processeurs principaux sont des messages indicatifs de la reconfiguration, indique à l'opérateur que la reconfiguration est achevée, autorisant de ce fait l'opérateur à déconnecter le premier dispositif et qui, si au moins un message de rejet de déconnexion a été reçu d'au moins un des processeurs principaux, indique à l'opérateur que la reconfiguration a été refusée.

2. Système de traitement de l'information tel que revendiqué dans la revendication 1, dans lequel se trouvent plusieurs voies à canal (11, 12, 15) s'étendant entre un processeur principal (10) et un sous-ensemble périphérique (13), parmi lesquelles des voies de canaux déterminées au préalable sont groupées logiquement, un moyen de communication (32) incluant un moyen pour envoyer une requête sur chacune des voies des canaux qui peuvent être englobées dans un chemin d'accès entre le processeur principal et le dispositif qui doit être déconnecté, excepté que dans les voies à canaux appartenant à un groupe de voies de canaux la requête est envoyée sur l'une quelconque des voies à canaux à l'intérieur du groupe respectif des voies à canaux.

3. Système de traitement de l'information tel que revendiqué dans la revendication 2, dans lequel un sous-système périphérique (13) comprend plusieurs unités de commande programmées (14) et un plus grand nombre encore d'unités périphériques, le dispositif générateur (32) incluant un moyen de communication (32) dans chacune des unités de commande, qui sont utilisables indépendamment pour établir des requêtes de reconfiguration;
chacune des unités de commande (14) incluant, dans un chemin d'accès du sous-système périphérique (13), des dispositifs qui sont des dispositifs de cheminement et chacune des unités périphériques incluant au moins un dispositif qui est un dispositif périphérique avec des interconnexions entre les unités de commande (14) et les unités périphériques de sorte que chaque unité périphérique est accessible par l'un quelconque des divers dispositifs de cheminement dans n'importe laquelle des unités de commande;
chacune des unités de commande (14) ayant un chemin de configuration pour chacun des dispositifs périphériques qui inclut l'identification de tous les chemins d'accès internes du sous-système, comprenant l'identification des dispositifs de cheminement et comprenant en outre un chemin de configuration pour chacun des dispositifs de cheminement qui, parmi les dispositifs périphériques, sont accessibles par le dispositif de cheminement respectif; et
le moyen de communication (32) sondant les mappes pour déterminer par quelle voie à canaux et par quel groupe de chemin à canaux il faut envoyer la requête au système principal.

4. Ensemble de traitement de l'information déterminé dans l'une quelconque des revendication 2 ou 3, comprenant en outre, en combinaison:
dans chacune des unités de commande (14), des dispositifs ayant accès aux mappes de configuration et prêts, dés que le système est lancé, à fournir une copie de toutes les mappes de configuration au système principal; et
le moyen de commande de la configuration, dans le processeur principal, recevant les mappes de configuration et les mettant en mémoire et y accédant lors de l'analyse, pour examiner la mappe de configuration afin de déterminer les effets de la reconfiguration et pour changer les mappes lorsque la reconfiguration est approuvée.

5. Système de traitement de l'information tel que revendiqué dans la revendication 4, comprenant en outre, en combinaison:
une console de commande pour le pupitreur connectée au processeur principal pour établir la communication entre le dit pupitreur et un processeur principal; et
le moyen de commande de la configuration compris dans le processeur principal étant couplé à la dite console et, pour chaque requête de reconfiguration reçue, délivrant à la console un message en vue de l'obtention de l'approbation du pupitreur concernant la reconfiguration demandée avant d'approuver la reconfiguration demandée.

6. Système de traitement de l'information tel que revendiqué dans la revendication 4 ou 5, où le moyen de commande de la configuration est couplé en ordre de marche aux tables de configuration enregistrées et, ayant un dispositif d'analyse qui effectue les analyses, y compris l'examen des tables de configuration mises en mémoire, afin d'établir si la reconfiguration demandée supprimerait le dernier chemin d'accès vers n'importe lequel des dispositifs et, approuvant la reconfiguration uniquement si au moins un chemin d'accès est conservé pour n'importe quel dispositif du sous-système (13).

7. Système de traitement de l'information tel que revendiqué dans l'une quelconque des revendications 4 ou 6, où le moyen de commande de la configuration compris dans le processeur principal possède un moyen de contrôle d'erreurs pour analyser chaque requête de reconfiguration reçue afin de détecter les erreurs contenues dans la requête et, si une erreur est détectée dans l'une quelconque des requêtes reçues, de ne pas approuver cette requête.

8. Système de traitement de l'information tel que revendiqué dans l'une quelconque des revendications 4 ou 7, où le système principal inclut une console de commande et le processeur principal a plusieurs tables d'adressage; un dispositif d'interrogation dans le dispositif de réponse du moyen de commande de la configuration pour envoyer des interrogations à la console en vue d'obtenir l'autorisation du processeur principal, pour examiner une requête de reconfiguration reçue afin de détecter les erreurs et, pour déterminer le dernier chemin d'accès à un dispositif touché par la requête de reconfiguration et envoyer une indication de rejet au dispositif de réponse quand l'une quelconque des interrogations montre une absence d'autorisation du pupitreur, l'existence d'un dernier chemin ou l'existence d'une erreur; le dispositif de réponse envoyant l'information de rejet dans la commande d'état du système d'écriture.

9. Système de traitement de l'information tel que revendiqué dans la revendication 8, où un dispositif d'identification est en outre inclus dans le dispositif de réponse pour ajouter à la commande d'état du système d'écriture, des informations identifiant le chemin d'accès et le processeur principal d'où provient le rejet.

10. Système de traitement de l'information tel que revendiqué dans la revendication 3, où chacune des unités de commande (14) comprend une partie unique de l'entrée de l'instruction qui agit en tant que parties de l'instruction entrée pour l'ensemble des dispositifs de cheminement dans cette unité de commande; chacune des parties de l'instruction entrée commune incluant des moyens programmés constituant le moyen de requête de reconfiguration et le moyen de communication; et plusieurs unités périphériques combinées aux unités de commande (14) pour communiquer avec elles et chaque unité périphérique incluant au moins un des dispositifs périphériques et ayant une partie de l'entrée de l'instruction périphérique commune, pour tous les dispositifs compris dans l'unité périphérique respective, l'ensemble constituant les parties de l'entrée de l'instruction des dispositifs respectifs et, incluant un moyen pour délivrer au moyen de communication les requêtes de reconfiguration reçues des parties respectives de l'entrée de l'instruction commune périphérique pour établir un relais avec le processeur principal, via l'un des dispositifs de cheminement compris dans l'un des chemins d'accès au dispositif qui est reconfiguré, à partir du système principal.

11. Système de traitement de l'information tel que revendiqué dans la revendication 10, où, au lieu de provenir des dispositifs, la partie de l'entrée de l'instruction peut venir d'une console principale unique afin de permettre au contrôleur de coordonner la suppression des ressources de tous les processeurs principaux rattachés.
